# EUROPÄISCHE PATENTANMELDUNG

(11) **EP 2 181 754 A1**
(43) Veröffentlichungstag der Anmeldung: **05.05.2010**
(21) Anmeldenummer: 08019111.7
(22) Anmeldetag: 31.10.2008
(51) Int. Cl.: B01D 53/14

(54) **Verfahren und Vorrichtung zum Abtrennen von Kohlendioxid aus einem Abgas einer fossilbefeuerten Kraftwerksanlage**

(71) Anmelder: Siemens Aktiengesellschaft, 80333 München (DE)
(72) Erfinder: Grundei, Daniel, 46049 Oberhausen (DE); Hein, Olaf, Dr., 45481 Mülheim an der Ruhr (DE); Kaufmann, Carsten, 45478 Mülheim a.d. Ruhr (DE); Kliemke, Hardy, 45475 Mühlheim a.d.Ruhr (DE); Sandhaas, Steven, 40223 Düsseldorf (DE); Scheuer, Uwe, 45475 Mühlheim (DE); Waruschewski, Andreas, 45356 Essen (DE)

(57) **Zusammenfassung**

Verfahren und Vorrichtung zum Abtrennen von Kohlendioxid aus einem Abgas einer fossilbefeuerten Kraftwerksanlage Die Erfindung betrifft Verfahren zum Abtrennen von Kohlendioxid aus einem Rauchgas einer fossilbefeuerten Kraftwerksanlage (1), bei dem in einem Verbrennungsprozess (3) ein fossiler Brennstoff verbrannt wird, wobei ein heißes, kohlendioxidhaltiges Abgas (5) erzeugt wird, bei dem in einem Absorptionsprozess (7) kohlendioxidhaltiges Abgas (5) mit einem Absorptionsmedium (19) in Kontakt gebracht wird, wobei Kohlendioxid von dem Absorptionsmedium (19) aufgenommen wird, wobei ein beladenes Absorptionsmedium (11) gebildet wird, bei dem in einem Vorwärmprozess (13) das beladene Absorptionsmedium (11) mit dem kohlendioxidhaltigen Abgas (5) im Wärmetausch geführt wird, wobei das beladene Absorptionsmedium (11) vorgewärmt wird, und bei dem in einem Desorptionsprozess (15) von dem beladenen Absorptionsmedium (11) gasförmiges Kohlendioxid (27) thermisch ausgetrieben wird.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage. Die Erfindung betrifft außerdem eine fossilbefeuerte Kraftwerksanlage mit einer Abscheideeinrichtung zum Abtrennen von Kohlendioxid aus einem Abgas.

Bei fossilbefeuerten Kraftwerksanlagen zur Erzeugung elektrischer Energie in großtechnischem Maßstab entsteht durch die Verbrennung eines fossilen Brennstoffes ein kohlendioxidhaltiges Abgas. Neben Kohlendioxid enthält das Abgas weitere Verbrennungsprodukte wie z.B. die Gase Stickstoff, Schwefeldioxid, Stickoxide und Wasserdampf sowie Festkörperpartikel, Stäube und Ruß. In neueren oder modernisierten Kraftwerksanlage werden bereits Festkörperbestandteile, Schwefeloxide sowie Stickoxide weitgehend durch entsprechende Abscheidevorrichtungen aus dem Abgas entfernt. Das in dem Abgas enthaltene Kohlendioxid wird bislang mit dem Abgas in die Atmosphäre entlassen. Das sich in der Atmosphäre ansammelnde Kohlendioxid behindert die Wärmeabstrahlung unserer Erde und begünstigt durch den so genannten Treibhauseffekt eine Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post-combustion CO₂ separation) ist die Methode der Absorption-Desorption bekannt.

Das beschriebene Abtrennen von Kohlendioxid mit dem Absorptions-Desorptionsverfahren erfolgt mit einem Waschmittel. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet, gekühlt und verflüssigt werden. In flüssigem oder gefrorenem Zustand kann das Kohlendioxid dann einer Lagerung oder einer weiteren Verwertung zugeführt werden. Das regenerierte Lösungsmittel wird zur Absorberkolonne zurückgeleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Gasgemisch im großtechnischen Maßstab ist insbesondere der sehr hohe Energieaufwand, der in Form von Heizenergie für die Desorption benötigt wird.

Genereller Nachteil an bekannten Abtrennverfahren für Kohlendioxid aus einem Abgas, die in oder nach einen Kraftwerksprozess geschaltet sind, ist insbesondere der signifikante Wirkungsgrad verschlechternde Einfluss der Abtrennvorrichtung auf den Kraftwerksprozess. Zu dieser Wirkungsgradverschlechterung kommt es, da die Energie zur Durchführung der Kohlendioxidabtrennung aus dem Kraftwerksprozess entnommen werden muss. Die Wirtschaftlichkeit einer fossilbefeuerten Kraftwerksanlage mit Kohlendioxid-Abtrennungsvorrichtung ist daher deutlich geringer als ohne Kohlendioxid-Abtrennungsvorrichtung.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz bei zugleich günstigem Gesamtanlagenwirkungsgrad des Kraftwerksprozesses ermöglicht.

Eine weitere Aufgabe der Erfindung ist es, eine fossilbefeuerte Kraftwerksanlage mit integrierter Abscheideeinrichtung für Kohlendioxid vorzuschlagen, welche eine hohe Abscheideeffizienz bei zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage, bei dem in einem Verbrennungsprozess ein fossiler Brennstoff verbrannt wird, wobei ein heißes, kohlendioxidhaltiges Abgas erzeugt wird, bei dem in einem Absorptionsprozess kohlendioxidhaltiges Abgas mit einem Absorptionsmedium in Kontakt gebracht wird, wobei Kohlendioxid von dem Absorptionsmedium aufgenommen wird, wobei ein beladenes Absorptionsmedium gebildet wird, bei dem in einem Vorwärmprozess das beladene Absorptionsmedium mit dem kohlendioxidhaltigen Abgas im Wärmetausch geführt wird, wobei das beladene Absorptionsmedium vorgewärmt wird, und bei dem in einem Desorptionsprozess von dem beladenen Absorptionsmedium gasförmiges Kohlendioxid abgegeben wird.

Die Erfindung geht dabei von der Überlegung aus, die in dem Abgas einer fossilbefeuerten Kraftwerksanlage enthaltene Wärme zur Vorwärmung des beladenen Absorptionsmediums genutzt wird. Die Wärme kann dabei in direktem Wärmeaustausch zwischen dem beladenen Absorptionsmedium und dem Abgas oder auch indirekt über einen Arbeitsmittelkreislauf zum Wärmeaustausch übertragen werden.

Das kohlendioxidhaltige Abgas und ein weitgehend von Kohlendioxid freies Absorptionsmedium werden in jeweils entgegenströmender Richtung in den Absorptionsprozess eingeleitet. Dadurch entsteht in dem Absorptionsprozess ein Konzentrations-Stoffgradient an Kohlendioxid. Bei der Einleitung des kohlendioxidhaltigen Abgases hat dieses einen hohen Gehalt an Kohlendioxid. Das Absorptionsmedium ist bei Einleitung weitgehend frei von Kohlendioxid. Bei der Durchleitung des kohlendioxidhaltigen Abgases durch den Absorptionsprozess wird Kohlendioxid kontinuierlich an das Absorptionsmedium abgegeben. Den Absorptionsprozess verlassen ein von Kohlendioxid befreites Abgas sowie ein mit Kohlendioxid beladenes Absorptionsmedium. Bei der Ausleitung des beladenen Absorptionsmediums hat dieses weitgehend das Kohlendioxid des Abgases aufgenommen. Zur Austragung des Kohlendioxids muss das beladene Absorptionsmedium regeneriert werden. Die Regenerierung erfolgt in dem Desorptionsprozess.

Vor Einleitung in den Desorptionsprozess wird das beladene Absorptionsmedium nun gemäß der Erfindung mit dem Abgas der Verbrennungseinrichtung im Wärmetausch geführt. Dabei wird Wärme aus dem heißen Abgas auf das beladene Absorptionsmedium übertragen. Dadurch wird eine Vorwärmung des beladenen Absorptionsmediums erzielt, so dass das beladene Absorptionsmedium nun in etwa der Betriebstemperatur des Desorptionsprozesses entspricht. Der Wärmetausch erfolgt vor Eintritt des beladenen Absorptionsmediums in den Desorptionsprozess.

In dem Desorptionsprozess wird Kohlendioxid von dem beladenen Absorptionsmedium abgegeben. Dabei wird ein regeneriertes Absorptionsmedium sowie ein Gasgemisch aus gasförmigem Kohlendioxid und dampfförmigen Absorptionsmedium gebildet. Das Gas-Dampfgemisch wird auch als Brüden bezeichnet. Da sich das beladene Absorptionsmedium durch die aus dem Abgas aufgenommene Wärme bereits auf Arbeitstemperatur des Desorptionsprozesses befindet, muss keine Zusätzliche Energie zum Vorwärmen des beladenen Absorptionsmediums aufgewandt werden. Außerdem wird durch die Einbringung eines bereits auf Betriebstemperatur befindlichen, beladenen Absorptionsmediums die Energie zum aufrechterhalten des Prozesses reduziert.

Durch Entspannen des Brüden in einer Entspannungsturbine wird zusätzliche Energie gewonnen. Nach Entspannung des Brüden erfolgt durch Kondensation eine Trennung von Kohlendioxid und Wasser. Das Wasser wird im Folgenden für den Gasturbinenprozess verwendet. Dabei wird es vorzugsweise zwischen Verdichter und Rekuperator eingedüst.

Das regenerierte Absorptionsmedium wird nun wieder dem Absorptionsprozess zugeführt. Durch die Rückführung des Absorptionsmediums in den Absorptionsprozess wird das Absorptionsmedium zwischen dem Absorptionsprozess und dem Desorptionsprozess in einem Kreislauf geführt.

Somit kann die zum Austreiben von Kohlendioxid aus dem beladenen Absorptionsmedium erforderliche Energie, die sonst in Form von Prozesswärme bereitgestellt werden muss, maßgeblich reduziert werden. Die eingesparte Prozesswärme steht folglich dem Kraftwerksprozess zur Verfügung und kann z.B. zur Stromerzeugung beitragen. Dadurch erhöht sich der Wirkungsgrad der Kraftwerksanlage deutlich.

Ein Vorteil besteht zudem darin, dass der Prozess mit einer Kältemaschine zur Absenkung der Verdichtereintrittstemperatur betrieben werden kann. Dies ist möglich, da die Prozesswärme, die bei der Verdichterzwischenkühlung gewonnen wird, nicht für die Abtrennung von Kohlendioxid benötigt wird.

Die Abgastemperatur im Kamin wird durch den Wärmeentzug des Abgases deutlich niedriger sein als bei einem herkömmlichen Gasturbinenprozess. Dadurch bietet es sich an, den Entschwefelungsprozess vor den Kohlendioxid-Abscheideprozess zu schalten.

Als fossile Brennstoffe eignen sich Gase wie z.B. Erdgas (Methan, Ethan, Propan, Butan, Ethen) oder Flüssigkeiten wie z.B. Erdöl.

Das Verfahren zum Abtrennen von Kohlendioxid aus einem Abgas einer fossilbefeuerten Kraftwerksanlage ermöglicht somit einen wesentlichen effizienteren Betrieb durch einen erhöhten Gesamtwirkungsgrad der Kraftwerksanlage. Dies wird dadurch erreicht, dass Energie zum Betrieb des Desorptionsprozesses eingespart wird, da Wärme aus dem Abgas der Verbrennungsanlage zur Vorwärmung des beladenen Absorptionsmediums genutzt wird. Die Erfindung ermöglicht zudem die nachträgliche Installation einer Kohlendioxid-Abscheideeinrichtung unter Erfüllung ökonomischer Bedingungen.

Zweckmäßigerweise wird bei dem Kohlendioxid-Abtrennungsverfahren in dem Desorptionsprozess von dem beladenen Absorptionsmedium gasförmiges Kohlendioxid thermisch ausgetrieben. Dies ermöglicht die Nutzung von Wärme, die in dem Gesamtprozess der Kraftwerksanlage auf günstige Weise entnommen werden kann. Idealerweise wird dem Desorptionsprozess Wärme in dem Umfang zugeführt, dass dem Desorptionsprozess keine weitere Energie zugeführt werden muss.

Vorteilhafterweise werden in dem Kohlendioxid-Abtrennungsverfahren Flüssigkeiten, Gase, Aerosole oder Suspensionen als Absorptionsmedium eingesetzt. Als Flüssigkeit wird vorzugsweise die Verwendung eines verdampfbaren Lösungsmittels vorgeschlagen. Ein besonders guter Prozessdurchlauf wird durch eine Lösung aus H₂O und Aminderivaten als Lösungsmittel erzielt. Bekannt sind beispielsweise Lösungen unter den Namen MEA (Mono-Ethanolamin) und MDEA (Methyldiethanolamin). Ebenso vorteilhaft handelt es sich bei den Flüssigkeiten um Ionische Flüssigkeiten. Dadurch lässt sich der Trennvorgang bei niedrigeren Temperaturen durchführen.

Bei einer vorteilhaften Weiterentwicklung wird das Gas-Dampfgemisch einem Trennprozess zugeführt, wobei durch Kondensation Absorptionsmedium und Kohlendioxid weitgehend voneinander getrennt werden. Dabei werden ein kondensiertes Absorptionsmedium und gasförmiges Kohlendioxid gebildet. Das abgetrennte kondensierte Absorptionsmedium kann nun wieder dem Absorptionsmittelkreislauf zur Verfügung gestellt werden. Das gasförmige Kohlendioxid kann nun einer weiteren Verwendung oder Verarbeitung zugeführt werden.

Die weitere Verarbeitung kann nun vorteilhafterweise darin bestehen, dass das gasförmige Kohlendioxid in einem Verdichterprozess verdichtet wird. Durch den Verdichtungsprozess wird ein verdichtetes Kohlendioxid gebildet, welches eine Temperaturerhöhung ΔT erfährt, und auf eine Temperatur T1 erwärmt wird. Das erwärmte, verdichtete Kohlendioxid wird nun mit dem beladenen Absorptionsmedium in einem Wärmetauscherprozess im Wärmetausch geführt. Dabei wird Wärme von dem verdichteten Kohlendioxid auf das beladene Absorptionsmedium übertragen. Vorteilhafterweise kann auch das Gas- Dampfgemisch mit dem beladenen Absorptionsmedium in einem Wärmetauscherprozess im Wärmetausch geführt wird. Dabei wird Wärme des Gas-Dampfgemisches zur Vorwärmung auf das beladene Absorptionsmedium übertragen.

Bei einer besonderen Ausgestaltung des Kohlendioxid-Abtrennungsverfahrens wird in einem Wärmetauscherprozess Wärme von regeneriertem Absorptionsmedium entzogen, an ein beladenes Absorptionsmedium abgegeben und dem Absorptionsprozess zugeführt. Dadurch wird einerseits eine Vorwärmung des beladenen Absorptionsmediums an die Arbeitstemperatur des nachgeschalteten Desorptionsprozesses und andererseits eine Abkühlung des regenerierten Absorptionsmediums an die Arbeitstemperatur des nachgeschalteten Absorptionsprozesses erzielt. Dadurch kann Energie zum Erwärmen des beladenen Absorptionsmediums und Energie zum Kühlen des regenerierten Absorptionsmediums eingespart werden. Der Wärmeübertrag von dem regenerierten Absorptionsmedium auf das beladene Absorptionsmedium kann auch in Abhängigkeit von dem erforderlichen Temperaturniveau im Absorptionsprozess erfolgen. Dazu ist ein zusätzlicher Regelprozess vorgesehen.

In einer vorteilhaften Weiterbildung des Kohlendioxid-Abtrennungsverfahrens wird das regenerierte Absorptionsmedium in den Absorptionsprozess zurückgeführt, wobei ein Kreislauf aus Absorptionsmedium zwischen dem Absorptionsprozess und dem Desorptionsprozess gebildet wird. Zweckmäßigerweise wird auch das kondensierte Absorptionsmedium aus dem Trennprozess dem Kreislauf aus Absorptionsmedium zugeführt.

Vorteilhafterweise kommt das beschriebene Kohlendioxid-Abtrennungsverfahren bei einer Gasturbinenkraftwerksanlage oder bei einer kombinierten Gas- und Dampfturbinen-Kraftwerksanlage zur Anwendung. Die Implementierung des beschriebenen Kohlendioxid-Abtrennungsverfahrens in andere fossilbefeuerte Kraftwerksprozesse ist dann ebenso sinnvoll, wenn das Kohlendioxid-Abtrennungsverfahren vorhandene Energie des Kraftwerksprozesses nutzen kann.

Das Wasser, welches bei dem Kohlendioxid-Abtrennverfahren im Desorptionsprozess anfällt, wird vorteilhaft dem Gasturbinenprozess zugeführt. Die Zuführung in den Gasturbinenprozess erfolgt dabei durch Eindüsung und vorzugsweise zwischen Verdichterende und Rekuperatoreintritt. Eine Eindüsung vor dem Verdichtereintritt ist ebenso möglich, da dadurch eine Absenkung der Temperatur des Luftmassenstroms erzielt wird. Eine Kombination der Eindüsungsstellen ist ebenso denkbar.

Die auf eine fossilbefeuerte Kraftwerksanlage gerichtete Aufgabe wird erfindungsgemäß gelöst mit einer Verbrennungseinrichtung nachgeschalteten Abscheideeinrichtung, zur Abscheidung von Kohlendioxid aus einem kohlendioxidhaltigen Abgas, wobei die Abscheideeinrichtung eine Absorptionseinheit zur Aufnahme von gasförmigen Kohlendioxid sowie eine Desorptionseinheit zur Abgabe von gasförmigen Kohlendioxid aufweist, wobei ein Wärmetauscher vorgesehen ist, der sekundärseitig in den Strom des kohlendioxidhaltigen Abgases geschaltet ist, und primär zuleitend mit der Absorptionseinheit und primär ableitend mit der Desorptionseinheit verbunden ist, so dass im Betrieb der Abscheideeinrichtung ein der Desorptionseinheit zuführbares Absorptionsmedium mit Wärme aus dem kohlendioxidhaltigen Abgas vorwärmbar ist.

Dabei geht die Erfindung von der Überlegung aus, einen Wärmetauscher derart in eine fossilbefeuerte Kraftwerksanlage mit integrierter Kohlendioxid-Abscheideeinrichtung zu verschalten, dass das kohlendioxidhaltigen Abgas der fossilbefeuerten Kraftwerksanlage mit einem beladenen Absorptionsmedium der Kohlendioxid-Abscheideeinrichtung im Wärmetausch führbar ist. Dabei ist Wärme aus dem heißen kohlendioxidhaltigen Abgas auf das beladene Absorptionsmedium übertragbar. Dadurch ist eine Erwärmung des beladenen Absorptionsmediums auf Betriebstemperatur der dem Wärmetauscher nachgeschalteten Desorptionseinheit erzielbar.

Die primäre Seite des Wärmetauschers ist die Energie abgebende Seite und die sekundäre Seite die Energie aufnehmende Seite.

Die Absorptionseinheit umfasst eine entlang einer vertikalen Achse ausgerichteten Säule. Die Säule weist im oberen Bereich einen Einlass und im unteren Bereich einen Auslass auf. Im Betrieb ist dadurch regeneriertes Absorptionsmedium im oberen Bereich einführbar, und beladenes Absorptionsmedium im unteren Bereich ausleitbar. Durch die Absorptionseinheit ist ein kohlendioxidhaltiges Abgas leitbar, so dass eine Durchströmung nach dem Gegenstromprinzip von kohlendioxidhaltigem Abgas und Absorptionsmedium bewirkt ist. Auch die Desorptionseinheit umfasst eine entlang einer vertikalen Achse ausgerichteten Säule. Die Säule weist im oberen Bereich einen Einlass und im unteren Bereich einen Auslass auf. Im Betrieb ist somit beladenes Absorptionsmedium im oberen Bereich einführbar und im unteren Bereich ein regeneriertes Absorptionsmedium ausleitbar, wodurch eine Durchströmung der Desorptionseinheit mit beladenem Absorptionsmediums bewirkt ist. Das Austreiben von Kohlendioxid aus einem Absorptionsmedium erfolgt dabei vornehmlich thermisch, da dadurch auf im Kraftwerk bereitgestellte Wärmeenergie zurückgegriffen werden kann. Die Absorptionseinheit und die Desorptionseinheit können auch mehrere Säulen aufweisen. Solche Säulen sind in der chemischen Industrie auch als Kolonnen bekannt und dienen dazu, Stoffgemische durch thermische Verfahren zu trennen. Dies erfolgt unter Ausnutzung von Gleichgewichtszuständen zwischen unterschiedlichen Phasen.

Die Abscheideeinrichtung mit einem für die Aufnahme von Kohlendioxid geeigneten Absorptionsmedium, insbesondere einem Waschmittel für Kohlendioxid, betreibbar. Für den Betrieb mit dem Absorptionsmedium sind zusätzlich entsprechende Tanks für reines und beladenes Absorptionsmedium, Rohrleitungen, Ventile und Mess-, Kontroll- und Steuerelemente vorgesehen.

Bislang ist es bekannt, in einem Wärmetauscher das beladene Absorptionsmedium mit dem regenerierten Absorptionsmedium im Wärmetausch zu führen. Dabei wird die im regenerierten Absorptionsmedium enthaltene Wärme auf das beladene Absorptionsmedium übertragen, so dass eine Vorwärmung des beladenen Absorptionsmediums erreicht wird. Durch die Kombination der bekannten Verschaltung eines Wärmetauschers zur Nutzung der Wärme aus dem regenerierten Absorptionsmedium, mit dem in der Erfindung vorgeschlagenen Wärmetauscher zur Nutzung der Wärme aus dem kohlendioxidhaltigen Abgas, ist nun eine weitere Vorwärmung des beladenen Absorptionsmediums möglich. Dadurch ist in die Desorptionseinheit ein erwärmtes beladenes Absorptionsmedium einbringbar, wobei Energie zum Betrieb der Desorptionseinheit eingespart wird.

Die Erfindung einer fossilbefeuerten Kraftwerksanlage mit einem zusätzlichen Wärmetauscher zur Nutzung der Wärmeenergie aus dem kohlendioxidhaltigen Abgas zur Vorwärmung des beladenen Absorptionsmediums ermöglicht somit einen wesentlich effizienteren Betrieb der Gesamtkraftwerksanlage. Dies ist dadurch möglich, dass weniger Energie zum Betrieb der Kohlendioxid-Abscheideeinrichtung dem Kraftwerk entnommen werden muss. Die Erfindung ermöglicht zudem die nachträgliche Installation einer Kohlendioxid-Abscheideeinrichtung unter Erfüllung ökonomischer Bedingungen.

In einer vorteilhaften Weiterentwicklung der fossilbefeuerten Kraftwerksanlage ist die Desorptionseinheit thermisch in den Strom aus kohlendioxidhaltigem Abgas geschaltet, so dass Wärme aus dem kohlendioxidhaltigen Abgas der Desorptionseinheit zuführbar ist. Die Verschaltung erfolgt dabei derart, dass ein Übertrag von Wärme aus dem kohlendioxidhaltigen Abgas auf das beladene Absorptionsmedium möglich ist. Konstruktiv ist dies dadurch gewährleistet, indem die Desorptionseinheit über ein wärmeleitendes Element mit der Abgasleitung verbunden ist.

Bei einer weiteren vorteilhaften Ausgestaltung der fossilbefeuerten Kraftwerksanlage ist die Abgasleitung, durch welche das kohlendioxidhaltige Abgas leitbar ist, durch die Desorptionseinheit geführt. Konstruktiv ist es auch vorteilhaft, lediglich eine Teilleitung der Abgasleitung durch die Desorptionseinheit zu führen. Die Durchführung erfolgt dabei im Boden der Säule. Die Durchführung erfüllt damit die gleiche Funktion wie eins sonst übliche Heizvorrichtung. Derartige Heizvorrichtungen zum verdampfen einer Flüssigkeit werden auch als Sumpfverdampfer bezeichnet. Die Desorptionseinheit ist somit mit Wärme aus dem kohlendioxidhaltigen Abgas betreibbar. Anstatt der direkten Durchführung der Abgasleitung durch die Desorptionseinheit, kann zwischen Abgasleitung und Desorptionseinheit auch ein Arbeitsmittelkreislauf vorgesehen sein, durch welchen Wärme aus dem kohlendioxidhaltigen Abgas in die Desorptionseinheit einbringbar ist. Die Durchführung der Abgasleitung kann auch im mittleren Bereich der Säule angeordnet sein, wo sie die gleiche Funktion wie ein Seitenverdampfer bzw. einem Reboiler hat.

Weitere Vorteile der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend werden Ausführungsbeispiele der Erfindung anhand der beigefügten schematischen Zeichnungen näher erläutert. Es zeigt:
- FIG 1: ein Ausführungsbeispiel einer fossilbefeuerte Kraftwerksanlage mit Kohlendioxid- Abscheidevorrichtung mit Absorptionsmittelvorwär- mung durch das kohlendioxidhaltige Abgas.
- FIG 2: ein Ausführungsbeispiel einer fossilbefeuerten Kraftwerksanlage mit Kohlendioxid- Abscheidevorrichtung mit Beheizung der Desorption- seinheit durch das kohlendioxidhaltige Abgas.
- FIG 3: ein Ausführungsbeispiel eines Kohlendioxid- Abtrennungsverfahrens
- FIG 4: ein Ausführungsbeispiel eines Kohlendioxid- Abtrennungsverfahrens
- FIG 5: ein Ausführungsbeispiel eines Kohlendioxid- Abtrennungsverfahrens

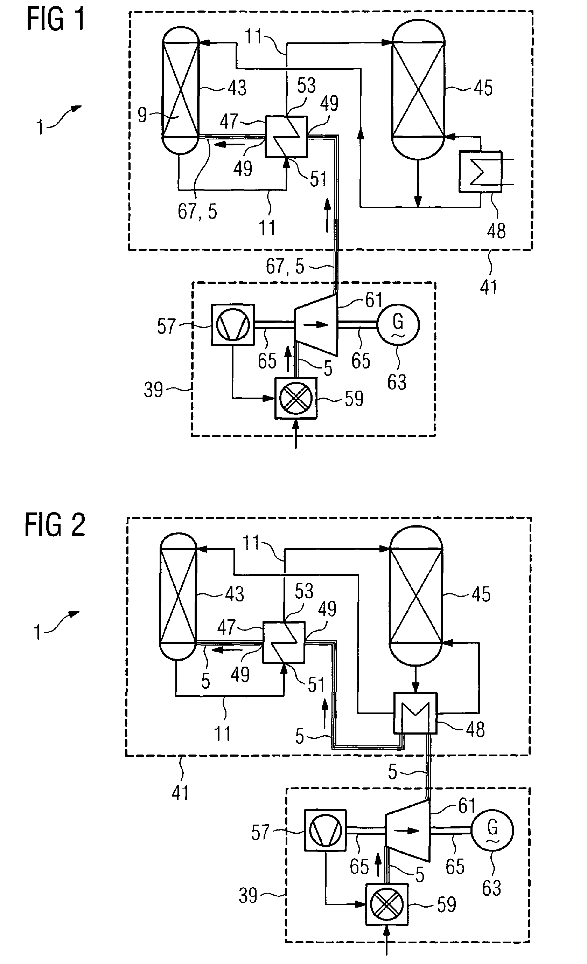

Die in FIG 1 dargestellte Ausführungsform einer fossilbefeuerten Kraftwerksanlage 1 besteht aus einer Verbrennungseinrichtung 39 und einer Abscheideeinrichtung 41.

Die Verbrennungseinrichtung 39 umfasst im Wesentlichen einen Luftverdichter 57, eine Brennkammer 59, einen Abgasentspannungsturbine 61, und einem Generator 63. Der Luftverdichter 57 ist druckleitend mit der Brennkammer 59 verbunden. In der Brennkammer 59 erfolgt eine Verbrennung eines zugeführten fossilen Brennstoffs mit der verdichteten Luft, wobei ein kohlendioxidhaltiges Abgas 5 gebildet wird. Die Brennkammer 59 ist Abgasleitend mit dem Einlass der Abgasentspannungsturbine 61 verbunden. Die Abgasentspannungsturbine 61 treibt über eine Welle 65 den Luftverdichter 57 und den Generator 63 an.

Die Abscheideeinrichtung 41 umfasst im Wesentlichen eine Absorptionseinheit 43, eine Desorptionseinheit 45 und einen Wärmetauscher 47. Die Abgasentspannungsturbine 61 ist über eine Abgasleitung 67 abgasleitend mit der Absorptionseinheit 43 verbunden. In die Abgasleitung 67 ist der Wärmetauscher 47 mit der Sekundärseite 49 geschaltet. Die Absorptionseinheit 43 ist fluidleitend für ein beladenes Absorptionsmedium 11 verbunden mit der Desorptionseinheit 45. In die Leitung für ein beladenes Absorptionsmedium 11 ist der Wärmetauscher 47 geschaltet. Dabei ist die Absorptionseinheit 43 fluidleitend mit der primären Zuleitung des Wärmetauschers 51 und von der primären Ableitung des Wärmetauschers 53 fluidleitend mit der Desorptionseinheit 45 verbunden. Die Desorptionseinheit 45 ist fluidleitend für ein regeneriertes Absorptionsmedium 19 verbunden mit der Absorptionseinheit 43. Nicht dargestellt ist hier ein Wärmetauscher, der primärseitig in die Leitung für das regenerierte Absorptionsmedium 19 und sekundärseitig in die Leitung für das beladene Absorptionsmedium geschaltet ist.

Die in FIG 2 gezeigte fossilbefeuerten Kraftwerksanlage 1 ist weitgehend analog zu der in FIG 1 gezeigten Verschaltung ausgestaltet. Zusätzlich zu den in FIG 1 aufgeführten Komponenten ist in FIG 2 ein Wärmetauscher 48 vorgesehen. Der Wärmetauscher 48 ist dabei zur Aufnahme von Wärme sekundär zuleitend mit der Abgasentspannungsturbine 61 abgasleitend verbunden. Über den Wärmetauscher 48 wird Wärme dem kohlendioxidhaltigen Abgas 5 entzogen und zum beheizen der Desorptionseinheit 45 zugeführt. Sekundär ableitend ist der Wärmetauscher 48 verbunden mit der Sekundärseite des Wärmetauschers 49. Über den Wärmetauscher 49 wird dem kohlendioxidhaltigen Abgas 5 Wärme entzogen und zur Vorwärmung dem beladenen Absorptionsmedium 11 zugeführt. Die übrige Verschaltung der gezeigten Komponenten ist analog zu FIG 1.

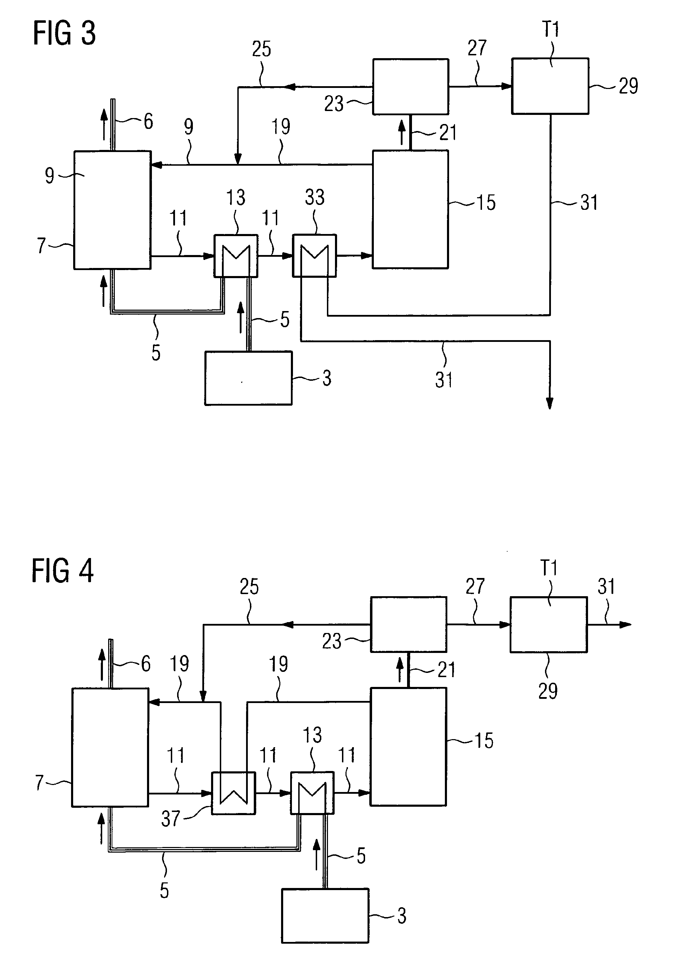

FIG 3 zeigt ein Ausführungsbeispiel eines Kohlendioxid-Abtrennungsverfahrens und insbesondere die Einbindung eines Vorwärmprozesses 13. Das Verfahren umfasst im Wesentlichen einen Verbrennungsprozess 3, einen Vorwärmprozess 13, einen Absorptionsprozess 7, einen Desorptionsprozess 15, einen Trennprozess 23 einen Verdichterprozess 29 und einen Wärmetauscherprozess 33.

In dem Verbrennungsprozess 3 wird zunächst ein kohlendioxidhaltiges Abgas 5 erzeugt, welches in dem Kohlendioxid-Abtrennungsverfahren von Kohlendioxid befreit wird. Dazu wird das Kohlendioxidhaltige Abgas 5 dem Vorwärmprozess 13 zugeführt. In dem Vorwärmprozess wird dem kohlendioxidhaltigen Abgas 5 Wärme entzogen. Das im Wärmebetrag reduzierte kohlendioxidhaltige Abgas 5 wird anschließend in den Absorptionsprozess 7 geleitet, wo es mit einem Absorptionsmedium 9 in Kontakt gebracht wird, wodurch Kohlendioxid von dem Absorptionsmedium aufgenommen wird, und ein beladenes Absorptionsmedium 11 und ein weitgehend von Kohlendioxid befreites Abgas 6 gebildet wird.

Das beladene Absorptionsmedium 11 wird in dem Absorptionsprozess 7 nachgeschalteten Vorwärmprozess 13 erwärmt. Anschließend wird das beladene Absorptionsmedium 11 in den Desorptionsprozess 15 geführt, wo es regeneriert wird. Durch die Regenerierung wird ein regeneriertes Absorptionsmedium 19 und ein Gas-Dampfgemisch 21 aus gasförmigem Kohlendioxid und dampfförmigem Absorptionsmedium gebildet. Das Gas-Dampfgemisch 21 wird einen dem Desorptionsprozess 15 nachgeschalteten Trennprozess 23 zugeführt, in dem kondensiertes Absorptionsmedium 25 und gasförmiges Kohlendioxid voneinander getrennt werden. Das kondensierte Absorptionsmedium 25 wird in den Kreislauf an Absorptionsmedium 9, 19 zurückgeführt. Das gasförmige Kohlendioxid 27 wird einem Verdichterprozess 29 zugeführt, wo es verdichtet und durch die Verdichtung erwärmt wird. Das verdichtete Kohlendioxid 31 wird anschleißend in einen Wärmetauscherprozess 33 geleitet in welchem 31 Wärme entzogen wird und an das beladene Absorptionsmedium 11 abgegeben wird. Somit ist eine Vorwärmung des beladenen Absorptionsmediums 11 durch das kohleindioxidhaltige Rauchgas 5 und durch das verdichtete Kohlendioxid 31 gegeben.

In Anlehnung an FIG 3 zeigt FIG 4 ein weiteres Ausführungsbeispiel eines Kohlendioxid-Abtrennungsverfahrens in dem in einem weiteren Wärmetauscher 37 eine Vorwärmung des beladenen Absorptionsmediums erreicht wird. Dazu wird wie bereits in FIG 3 beschrieben, im Absorptionsprozess kohlendioxidhaltiges Abgas 5 weitgehend von Kohlendioxid befreit, wobei ein beladenes Absorptionsmedium 11 gebildet wird, welches im nachgeschalteten Desorptionsprozess 15 regeneriert wird. Das regenerierte Absorptionsmedium 19 wird nun dem Wärmetauscher 37 zugeführt, wo es Wärme an das beladene Absorptionsmedium 11 abgibt. Im Anschluss wird das regenerierte Absorptionsmedium 19 wieder in den Absorptionsprozess 7 zurückgeführt.

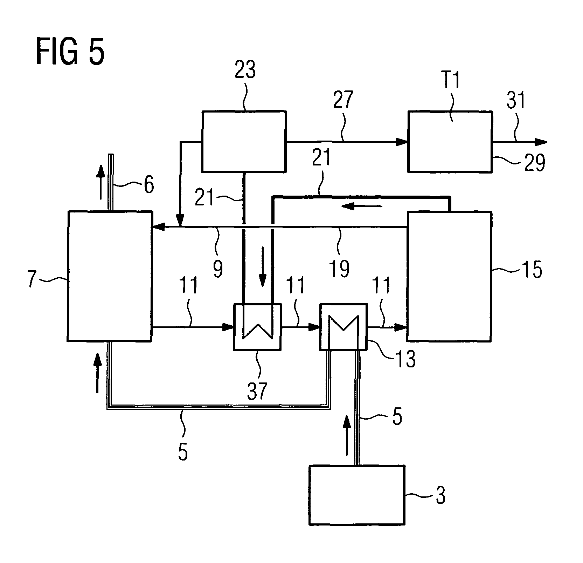

Ebenso wie FIG 3 und FIG 4 zeigt FIG 5 ein Ausführungsbeispiel eines Kohlendioxid-Abtrennungsverfahrens in dem zur Vorwärmung des beladenen Absorptionsmedium 11, zusätzlich zur Vorwärmung durch das kohlendioxidhaltige Rauchgas 5, Wärme von dem Gas-Dampfgemisch 21 auf das beladene Absorptionsmedium übertragen wird. Dazu ist ein zusätzlicher Wärmetauscherprozess 38 vorgesehen.

Das durch die Regeneration des beladenen Absorptionsmediums 11 entstehende Gas-Dampfgemisch 21 wird zunächst in den Wärmetauscher 38 geleitet, in dem Wärme aus dem Gas-Dampfgemisch 21 zur Vorwärmung an das beladene Absorptionsmedium 11 abgegeben wird.

Mit der Erfindung ist der Betrieb eines im Kohlendioxidausstroß reduzierten Kraftwerks mit hoher Effizienz möglich. Durch die Nutzung der in dem kohlendioxidhaltigen Abgas enthaltenen Wärme für den Desorptionsprozess wird Energie zum Betreiben des Desorptionsprozesses eingespart. Die Vorrichtung zum Abtrennen von Kohlendioxid aus einem kohlendioxidhaltigen Abgas ist Bestandteil der fossilbefeuerten Kraftwerksanlage. Durch die schaltungstechnische Verbesserung ist eine wesentliche Effizienzsteigerung gegenüber einer herkömmlichen Gasreinigungseinrichtung einer fossilbefeuerten Kraftwerksanlage erzielbar.

## Patentansprüche

1. Verfahren zum Abtrennen von Kohlendioxid aus einem Rauchgas einer fossilbefeuerten Kraftwerksanlage (1), bei dem
a) in einem Verbrennungsprozess (3) ein fossiler Brennstoff verbrannt wird, wobei ein heißes, kohlendioxidhaltiges Abgas (5) erzeugt wird,
b) in einem Absorptionsprozess (7) kohlendioxidhaltiges Abgas (5) mit einem Absorptionsmedium (9) in Kontakt gebracht wird, wobei Kohlendioxid von dem Absorptionsmedium (9) aufgenommen wird, wobei ein beladenes Absorptionsmedium (11) gebildet wird,
c) in einem Vorwärmprozess (13) das beladene Absorptionsmedium (11) mit dem kohlendioxidhaltigen Abgas (5) im Wärmetausch geführt wird, wobei das beladene Absorptionsmedium (11) vorgewärmt wird,
d) in einem Desorptionsprozess (15) von dem beladenen Absorptionsmedium (11) gasförmiges Kohlendioxid (17) thermisch ausgetrieben wird.

2. Verfahren nach Anspruch 1, bei dem in dem Desorptionsprozess (15) von dem beladenen Absorptionsmedium (11) gasförmiges Kohlendioxid (17) thermisch ausgetrieben wird, wobei ein regeneriertes Absorptionsmedium (19) und ein Gas-Dampfgemisch (21) aus Kohlendioxid und Absorptionsmedium gebildet werden.

3. Verfahren nach Anspruch 2, bei dem zur Unterstützung des thermischen Austreibens und/oder zur Regenerierung des beladenen Absorptionsmediums (11) Wärme aus dem kohlendioxidhaltigen Abgas (5) zugeführt wird.

4. Verfahren nach einem der Ansprüche 1 bis 3, wobei als Absorptionsmedium (9) eine Flüssigkeit, ein Gas, ein Aerosol oder eine Suspension verwendet wird.

5. Verfahren nach Anspruch 4, wobei ein verdampfbares Lösungsmittel als Flüssigkeit verwendet wird.

6. Verfahren nach Anspruch 5, wobei eine Lösung aus H2O und Aminosäuresalz als verdampfbares Lösungsmittel verwendet wird.

7. Verfahren nach einem der Ansprüche 2 bis 6, bei dem das Gas-Dampfgemisch (21) einem Trennprozess (23) zugeführt wird, wobei durch Kondensation Absorptionsmedium und Kohlendioxid weitgehend voneinander getrennt werden, wobei ein kondensiertes Absorptionsmedium (25) und gasförmiges Kohlendioxid (27) gebildet werden.

8. Verfahren nach Anspruch 7, bei dem ein Teil des gasförmigen Kohlendioxids (17) in einem Verdichterprozess (29) verdichtet wird, wobei ein verdichtetes Kohlendioxid (31) gebildet wird, welches durch den Verdichterprozess (29) eine Temperaturerhöhung ΔT erfährt, und auf eine Temperatur T1 erwärmt wird.

9. Verfahren nach Anspruch 8, bei dem das verdichtete Kohlendioxid (31) mit dem beladenen Absorptionsmedium (11) in einem Wärmetauscherprozess (33) im Wärmetausch geführt wird, wobei Wärme des verdichteten Kohlendioxids (31) zur Vorwärmung auf das beladene Absorptionsmedium (11) übertragen wird.

10. Verfahren nach einem der Ansprüche 2 bis 9, bei dem das Gas- Dampfgemisch (21) mit dem beladenen Absorptionsmedium (11) in einem Wärmetauscherprozess (35) im Wärmetausch geführt wird, wobei Wärme des Gas-Dampfgemisches (21) zur Vorwärmung auf das beladene Absorptionsmedium (11) übertragen wird.

11. Verfahren nach einem der Ansprüche 2 bis 10, bei dem das regenerierte Absorptionsmedium (19) mit dem beladenen Absorptionsmedium (11) in einem Wärmetauscherprozess (37) im Wärmetausch geführt wird, wobei Wärme des regenerierten Absorptionsmediums (19) zur Vorwärmung auf das beladene Absorptionsmedium (11) übertragen wird.

12. Verfahren nach einem der Ansprüche 2 bis 11, bei dem das regenerierte Absorptionsmedium (19) dem Absorptionsprozess (7) zugeführt wird, wobei ein Kreislauf aus Absorptionsmedium zwischen dem Absorptionsprozess und dem Desorptionsprozess gebildet wird.

13. Verfahren nach Anspruch 12, bei dem das kondensierte Absorptionsmedium (25) aus dem Trennprozess (23) dem Kreislauf aus Absorptionsmedium zugeführt wird.

14. Verfahren nach einem der vorhergehenden Ansprüche, **gekennzeichnet durch** eine Anwendung bei einer Gasturbinenkraftwerksanlage.

15. Verfahren nach einem der Ansprüche 1 bis 13, **gekennzeichnet durch** eine Anwendung bei einer kombinierten Gas- und Dampfturbinen-Kraftwerksanlage (GUD).

16. Fossilbefeuerte Kraftwerksanlage (1) mit einer einer Verbrennungseinrichtung (39) nachgeschalteten Abscheideeinrichtung (41), zur Abscheidung von Kohlendioxid aus dem kohlendioxidhaltigen Abgas (5), wobei die Abscheideeinrichtung (41) eine Absorptionseinheit (43) zur Aufnahme von gasförmigen Kohlendioxid sowie eine Desorptionseinheit (45) zur Abgabe von gasförmigen Kohlendioxid aufweist, **dadurch gekennzeichnet, dass** ein Wärmetauscher (47) vorgesehen ist, der sekundärseitig (49) in den Strom des kohlendioxidhaltigen Abgases (5) geschaltet ist, und primär zuleitend (51) mit der Absorptionseinheit (43) und primär ableitend (53) mit der Desorptionseinheit (45) verbunden ist, so dass im Betrieb der Abscheideeinrichtung (41) ein der Desorptionseinheit (45) zuführbares Absorptionsmedium (55) mit Wärme aus dem Rauchgas vorwärmbar ist.

17. Fossilbefeuerte Kraftwerksanlage (1) nach Anspruch 16, wobei die Desorptionseinheit (45) thermisch in den Strom aus kohlendioxidhaltigem Abgas (5) geschaltet ist, so dass Wärme aus dem kohlendioxidhaltigen Abgas (5) der Desorptionseinheit (45) zuführbar ist.

18. Fossilbefeuerte Kraftwerksanlage (1) nach den Ansprüchen 16 oder 17, **dadurch gekennzeichnet, dass** eine Rauchgasleitung durch die das kohlendioxidhaltige Abgas (5) leitbar ist, durch die Desorptionseinheit (45) geführt wird.
